Europäisches Patentamt

European Patent Office

Office européen des brevets

(19)

(11) Veröffentlichungsnummer: **0 392 333**
**A2**

(12) **EUROPÄISCHE PATENTANMELDUNG**

(21) Anmeldenummer: **90106449.3**

(22) Anmeldetag: **04.04.90**

(51) Int. Cl.5: **G11B 5/70, G06K 19/02**

(30) Priorität: **08.04.89 DE 3911475**

(43) Veröffentlichungstag der Anmeldung:
**17.10.90 Patentblatt 90/42**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Kovacs, Jenoe, Dr.**
**Kantstrasse 9**
**D-6717 Hessheim(DE)**
Erfinder: **Feser, Rainer, Dr.**
**Colgensteiner Weg 25**
**D-6718 Grünstadt(DE)**
Erfinder: **Ohlinger, Manfred, Dr.**
**Anselm-Feuerbach-Strasse 13**
**D-6710 Frankenthal(DE)**
Erfinder: **Steuerwald, Manfred**
**Weidenstrasse 3b**
**D-6710 Frankenthal(DE)**

(54) **Prägefolie, insbesondere Heissprägefolien mit einer dünnen Magnetschicht.**

(57) Die Erfindung betrifft eine Prägefolie, insbesondere Heißprägefolie, bestehend aus einer Trägerfolie und einer von dieser ablösbaren Übertragungslage, welche wenigstens eine Magnetschicht aus einer Dispersion magnetisierbarer Teilchen auf der Basis von Chromdioxid und/oder Eisenoxid aufweist, und die gegebenenfalls auf der der Trägerfolie abgekehrten Seite eine zur Festlegung der Übertragungslage auf einem Substrat dienende Klebeschicht trägt.

EP 0 392 333 A2

## Prägefolie, insbesondere Heißprägefolien mit einer dünnen Magnetschicht

Die Erfindung betrifft eine Prägefolie, insbesondere Heißprägefolie, bestehend aus einer Trägerfolie und einer von dieser ablösbaren Übertragungslage, welche wenigstens eine Magnetschicht aus einer Dispersion magnetisierbarer Teilchen auf der Basis von Chromdioxid und/oder Eisenoxid aufweist, und die gegebenenfalls auf der der Trägerfolie abgekehrten Seite eine zur Festlegung der Übertragungslage auf einem Substrat dienende Klebeschicht trägt.

Transferfolien, auch Prägefolien genannt, werden bei der Herstellung von Kreditkarten, Gutscheinen, Bahnkarten, Parkausweisen, Personalausweisen usw. verwendet. Die Transferfolien bestehen aus einer Trägerfolie und einer von dieser ablösbaren Übertragungslage, welche mindestens eine Magnetschicht aus einer Dispersion magnetisierbarer Teilchen in mindestens einem Bindemittel besteht. Gegebenenfalls kann die Transferfolie auf über der Trägerfolie abgekehrten Seite eine zur Festlegung der Übertragungslage an einem Substrat dienende Klebeschicht tragen.

Prägefolien, insbesondere Heißprägefolien, mit einer Magnetschicht sowie verschiedenen Schichten, die mechanisch beschreibbar sind, werden in der DE-B 3422911 beschrieben. Dort ist ebenfalls die Möglichkeit angegeben, zur Fälschungssicherheit beugungsoptische Strukturen sowie Hologramme in die Transferschicht einzubauen. In ähnlicher Weise wird gemäß der WO 87/06745 vorgegangen. Auch wird auf der zur Trägerfolie weisenden Seite der Magnetschicht eine Deckschicht aufgebracht, welche durch ihre Undurchsichtigkeit die auf bzw. in dem Informationsträger vorhandenen speziell angeordneten magnetischen und unmagnetischen Spuren abdecken sollen.

Die auf die bekannte Weise ausgebildeten Transferschichten sind, um die vielfältigen Anforderungen sowohl an die Signierfähigkeit, die Abdeckung spezieller Strukturen, die Farbgestaltung als auch an die allgemeinen Sicherheiterfordernisse zu befriedigen, durch die Vielzahl von Schichten meist ziemlich dick, so daß es beim Gebrauch leicht zu mechanischen Kanten- oder Eckenbeschädigungen der auf den Gebrauchsträger aufgebrachten Schichten kommen kann. Die Folge solcher Beschädigungen sind dann schließlich auch Signalverluste der in dem magnetisierbaren Teil der Schicht gespeicherten Informationen. Dieser Nachteil könnte durch eine Verringerung der Gesamtdicke der transferierten Schichtanordnung d.h. der Übertragungslage, behoben werden, doch wären dann die einzelnen Schichtdicken der optisch, magnetisch und mechanisch wirksamen Schichten zu verringern. Diese Vorgehensweise ist zum einen aus technischen und zum anderen aus Kompatibilitätsgründen nicht generell zu realisieren.

Es bestand daher die Aufgabe, durch Verringerung der Gesamtschichtdicke die angegebenen Nachteile zu beheben.

Es wurde nun gefunden, daß sich mit Prägefolien, insbesondere Heißprägefolie, bestehend aus einer Trägerfolie und einer von dieser ablösbaren Übertragungslage, welche wenigstens eine Magnetschicht aus einer Dispersion magnetisierbarer Teilchen aufweist, die gegebenenfalls auf der Trägerfolie abgekehrten Seite eine zur Festlegung der Übertragungslage auf einem Substrat dienende Klebeschicht trägt, die Aufgabe lösen läßt, wenn die Übertragungslage aus einer Magnetschicht mit einer Schichtdicke von 4 bis 12 $\mu$m besteht und die Chromdioxid und/oder Eisenoxid als magnetisierbares Material enthaltende Magnetschicht eine Koerzitivfeldstärke von 22 bis 29 kA/m und eine remanente Magnetisierung von mindestens 130 mT aufweist.

Bedingung für die Reduzierung der Magnetschichtdicke ist, daß die Lesespannungskurve der aufgebrachten Transferschicht nach den ISO-Normen 3554 und 7811 im Fensterbereich liegt. Dies wird mit der erfindungsgemäßen Prägefolie mit einer Magnetschichtdicke von 4 bis 12 $\mu$m, bevorzugt 6 bis 10 $\mu$m erreicht. Dabei muß die Magnetschicht auf Basis Chromdioxid und/oder Eisenoxid eine Koerzitivfeldstärke von 22 bis 29 kA/m, bevorzugt 24 bis 28 kA/m und eine remanente Magnetisierung von mindestens 130 mT, bevorzugt von über 140 mT aufweisen. Je höher die remanente Magnetisierung, umso dünner können die Magnetschichten eingestellt werden. Ein weiterer Vorteil der erfindungsgemäßen Prägefolien ist die Möglichkeit, die Magnetschichten mit harten, hochvernetzten und/oder leitenden Deckschichten zu versehen, ohne daß dabei die Lesespannung verringert wird. Es war überraschend, daß hochremanente Magnetschichten mit Deckschichten oder Deckfolien wie beispielsweise PVC bis zu 40 $\mu$m Dicke überzogen werden können und daß dabei dennoch ausreichende Lesespannungen im Normbereich erhalten werden.

Als Magnetpigmente kommen vorzugsweise Chromdioxide mit einer spezifischen Oberfläche von 15 bis 30 m$^2$/g sowie Eisenoxide mit 12 bis 25 m$^2$/g oder cobaltdotierte Eisenoxide mit ähnlichen spezifischen Oberflächen, in Frage. Die Herstellung der Dispersionen geschieht in bekannter Weise in Kugelmühlen oder Rührwerksmühlen. Als Bindemittel kommen Polyurethane, VC-Copolymerisate, Epoxidharze, Nitrocellulose und ähnliche in Frage. Die Dispergierung wird mit Dispergierhilfsmitteln wie äthylen- und propylenoxidhaltigen Stoffen, die noch Phosphorsäureester als Restgruppe tragen, erleichtert. Bei Chromdioxiden ist es auch üblich, zinksalzhaltige Stoffe, wie Zinkoleate und/oder -stearate zuzusetzen. Da bei den Transferfolien der Ablösung der Transferschicht eine große Bedeutung zukommt, ist es auch üblich, feste Füllmittel wie Ruß, $TiO_2$ und/oder paraffinähnliche Stoffe, die die Haftkräfte gegenüber den Trägerfolien reduzieren, zuzugeben.

Je nach Verwendungszweck kann gegebenenfalls auf diese Magnetschicht noch eine Klebeschicht aufgebracht werden, mit der die Transferschicht später auf dem Substrat des Informationsträgers befestigt wird.

Der wiedergegebene Aufbau der erfindungsgemäßen Transferfolie ist im Rahmen der für derartige Informationsträger üblichen und bekannten Weise variierbar.

Die Erfindung sei anhand der folgenden Beispiele näher erläutert.

Beispiel A

In eine 250 l-Kugelmühle wurden 400 kg Stahlkugeln mit einem Durchmesser von 4 bis 6 mm sowie 40 Teile eines $CrO_2$-Pigmentes mit einer Koerzitivfeldstärke von 29,1 kA/m und einer spezifischen Oberfläche von 18 m²/g sowie 1,0 Teile von Zn-Oleat eingebracht. Anschließend wurden noch 2,67 Teile einer 20 %igen Phenoxyharzlösung sowie 17,07 Teile einer 12,5 %igen Polyurethanlösung, 0,27 Teile Tributoxyethylenphosphat zusammen mit 34,93 Teilen des Lösungsmittelgemisches THF/Dioxan (= 1:1) zugeführt. Die Mischung wurde dann 3 Tage gekugelt. Danach wurden wiederum 5,33 Teile der Phenoxyharzlösung, 34,13 Teile der Polyurethanlösung, 0,67 Teile Dioctylazetat und 1,87 Teile des Lösungsmittelgemisches THF/Dioxan (1:1) zugegeben. Die Dispersion wurde danach nochmals 24 Stunden gekugelt.

Beispiel 1

Eine 11,5 μ Polyesterfolie wurde zunächst unter Anwendung einer Rasterwalze mit einer 0,5 %igen Antihaftlösung aus Polyvinylalkoholcarbamat beschichtet. Die Schichtstärke lag bei 0,3 μ. Auf diese Schicht wurde dann eine 5 μm dicke Schicht mit der Dispersion gemäß Beispiel A aufgebracht. Die so entstandene Prägefolie wies eine Koerzitivfeldstärke von 27,0 kA/m und eine Remanenz von 177 mT auf.

Die Prägefolie wurde danach auf eine Kreditkarte nach ISO-Norm 7811 übertragen. Die Lesespannung der Karte lag genau auf dem Niveau des Referenzbandes. Die mechanische Stabilität der Magnetfolie war sehr hoch. Mit einem Codier- und Lesegerät, Typ MCS 1000 der Firma MID's, Herne/Westfalen konnten 5000 Durchläufe durchgeführt werden, ohne daß die Schicht beschädigt wurde.

Beispiel 2

Mit der in Beispiel A beschriebenen Dispersion wurden, wie im Beispiel 1 angegeben, Prägefolien hergestellt. Zwischen der Antihaftschicht und der Magnetschicht wurde noch eine mit 30 % Ruß gefüllte 1,6 μm dicke Schicht eingebaut. Die Schichtstärke der Chromdioxidschicht betrug 8,2 μm. Die Magnetschicht wurde mit Isocyanat vernetzt. Nach Herstellung einer neutralen Kreditkarte nach ISO-Norm 7811 wurde die Magnetschicht untersucht. Die Lesespannung lag in der oberen Hälfte des Fensters. Die Beständigkeit gegen Lösungsmittel wie Toluol und Äthanol waren sehr gut. Mit einem in den Lösungsmitteln getauchten Wattestäbchen wurde die Schicht zwanzigmal gerieben, ohne daß die Magnetschicht abfärbte. Der Dauerlauf nach 5000 Meßvorgängen lief ebenfalls ohne Oberflächenschädigung ab.

Beispiel 3

Die Dispersion gemäß Beispiel A wurde so modifiziert, daß anstatt 40 Teilen des $CrO_2$-Pigmentes nur 32 Teile eingewogen. Die fehlenden 8 Teile wurden mit einem Eisenoxidpigment einer Koerzitivfeldstärke von 26 kA/m ersetzt.

Mit der Dispersion wurden anschließend Prägefolien wie in Beispiel 2 angegeben, hergestellt, wobei anstatt einer 1,6 μ dicken Zwischenschicht eine 4 μm dicke Zwischenschicht aus einer 68 %igen Titanweiß-Dispersion hergestellt wurde. Nach Herstellung einer Kreditkarte lag die weiße Schicht über der 8,2 μm dicken Magnetschicht. Die Lesespannung des so hergestellten Magnetstreifens war nahezu identisch mit der Referenzkarte.

Mit der Kreditkarte konnten 5000 Durchläufe ohne Schädigung des Magnetstreifens durchgeführt werden.

Beispiel 4

Mit der Dispersion gemäß Beispiel A wurde eine 11,5 μm dicke Folie ohne Antihaftschicht mit einer Schichtstärke von 4,5 μm hergestellt. Auf der Folienrückseite wurde dann eine Haftschicht von 4 μm aufgebracht. Danach wurde eine 1/2" breite Magnetschicht auf einen Gutschein aus Hartpapier

bei 80°C aufgeklebt. Die Prüfung des Gutscheins mit Lösungsmittel wie Benzin, Alkohol und Methanol ergab keine Beschädigung.

## Ansprüche

Prägefolien, insbesondere Heißprägefolie, bestehend aus einer Trägerfolie und einer von dieser ablösbaren Übertragungslage, welche wenigstens eine Magnetschicht aus einer Dispersion magnetisierbarer Teilchen aufweist, die gegebenenfalls auf der Trägerfolie abgekehrten Seite eine zur Festlegung der Übertragungslage auf einem Substrat dienende Klebeschicht trägt, dadurch gekennzeichnet, daß die Übertragungslage aus einer Magnetschicht mit einer Schichtdicke von 4 bis 12 $\mu$m besteht und die Chromdioxid und/oder Eisenoxid als magnetisierbares Material enthaltende Magnetschicht eine Koerzitivfeldstärke von 22 bis 29 kA/m und eine remanente Magnetisierung von mindestens 130 mT aufweist.